Europäisches Patentamt

European Patent Office

Office européen des brevets

(19)

(11) Veröffentlichungsnummer: **0 314 614**
**A2**

(12) # EUROPÄISCHE PATENTANMELDUNG

(21) Anmeldenummer: 88810691.1

(22) Anmeldetag: 07.10.88

(51) Int. Cl.⁴: **B 65 H 27/00**

(30) Priorität: 28.10.87 CH 4212/87

(43) Veröffentlichungstag der Anmeldung:
03.05.89 Patentblatt 89/18

(84) Benannte Vertragsstaaten:
BE CH DE ES FR IT LI NL

(71) Anmelder: **Benninger AG**
**Fabrikstrasse**
**CH-9240 Uzwil (CH)**

(72) Erfinder: **Demirhan, Oezel**
**Bahnhofstrasse 93**
**CH-9240 Uzwil (CH)**

(74) Vertreter: **Wenger, René et al**
**Hepp & Partner AG Marktgasse 18**
**CH-9500 Wil (CH)**

(54) Hohlwalze zur Führung von Materialbahnen.

(57) Der Walzenaussenmantel (3) liegt auf einem Aussenrohr (4), das seinerseits über Stützstege (5) am Innenrohr (1) abgestützt ist. Die seitlich am Innenrohr befestigten Lagerzapfen (2, 2') sind ebenfalls mit einem Schutzrohr (8, 8') geschützt. Stirnseitig ist die Hohlwalze durch je eine Stirnscheibe (11, 11') abgeschlossen, welche einerseits mit dem Walzenaussenmantel (3) und andererseits mit einem Lagerzapfen (2 bzw. 2') fest verbunden ist.

Fig 1

Bundesdruckerei Berlin

**Beschreibung**

## Hohlwalze zur Führung von Materialbahnen

Die Erfindung betrifft eine Hohlwalze zur Führung von Materialbahnen, insbesondere von Textilbahnen gemäss dem Oberbegriff von Anspruch 1.

Derartige Walzen werden beispielsweise bei Textilveredelungsanlagen in grosser Zahl benötigt, um die Gewebebahn durch die verschiedenen Behandlungsstufen zu führen. Um die Gewebebahn bei den heute üblichen hohen Geschwindigkeiten und Bahnbreiten faltenfrei durch die Anlage führen zu können, sind stabile Walzen mit relativ grossem Durchmesser erforderlich. Da zur Behandlung von Gewebebahnen in der Regel aggressive Medien eingesetzt werden, müssen die Walzen einen vollkommen korrosionsfreien Ueberzug aufweisen. Gleichzeitig sollte das Gewicht der Walze so gering wie möglich gehalten werden, damit bei Montage- und Revisionsarbeiten keine grossen Gewichte bewegt werden müssen. Ausserdem sollte die Massenträgheit der Walzen so gering wie möglich sein, damit die Beschleunigung bzw. die Verzögerung der Walzen infolge ihrer Trägheit nicht zu einer Reibung zwischen der Gewebebahn und der Walzenoberfläche führt.

Durch die CH-A-661 329 der Anmelderin ist eine Hohlwalze bekannt geworden, bei welcher der Walzenaussenmantel aus rostfreiem Material durch einzelne Stützscheiben abgestützt wird, die in bestimmten Abständen auf dem Innenstützrohr angeordnet sind. Dabei ist der rohrförmige Walzenmantel auf die Stützscheiben aufgepresst. Der aus Kostengründen möglichst dünnwandig ausgebildete Walzenmantel aus rostfreiem Stahl kann bei hohen Belastungen jedoch deformiert werden, was die Laufeigenschaften der Hohlwalze beeinträchtigt. Es ist daher eine Aufgabe der Erfindung, eine Hohlwalze der eingangs genannten Art zu schaffen, die auch bei grossen Aussendurchmessern nur ein geringes Gewicht aufweist und bei der der Walzenaussenmantel auch bei hohen Belastungen über seine gesamte Länge abgestützt ist. Die Hohlwalze soll ausserdem möglichst einfach und kostengünstig herzustellen sein und auch aggressiven Substanzen sowie hohen Temperaturen schadlos widerstehen. Diese Aufgabe wird erfindungsgemäss mit einer Hohlwalze mit den Merkmalen nach Anspruch 1 gelöst.

Das über Stützstege am Innenrohr abgestützte, konzentrische Aussenrohr gewährleistet eine stabile Auflage für den Walzenaussenmantel. Die Bauweise der Walze kann dabei dadurch vereinfacht werden, dass das Aussenrohr, die Stützstege und das Innenrohr einstückig ausgebildet sind. Denkbar ist beispielsweise ein gegossenes oder gepresstes Rohr aus Leichtmetall. Die Stützstege können dabei zur gleichmässigen Lastaufnahme im Querschnitt etwa sternförmig ausgebildet sein und sich über die gesamte axiale Länge des Walzenaussenmantels erstrecken.

Auch Hohlwalzen mit grossen Durchmessern lassen sich herstellen, wenn der Walzenaussenmantel aus einem rostfreien Stahlblech gefertigt ist und um das Aussenrohr gewickelt ist, wobei die beiden aneinander stossenden Längsseiten miteinander verschweisst sind. Da Rohre aus rostfreiem Stahl nicht in allen Durchmessern und nicht in allen Qualitäten erhältlich sind, kann auf diese Weise der Walzenaussenmantel in jedem Fall den gewünschten Einzelanforderungen angepasst werden. In bestimmten Fällen wäre es selbstverständlich auch denkbar, als Walzenaussenmantel auf an sich bekannte Weise ein fertiges Rohr aus rostfreiem Stahl zu verwenden, welches auf das Aussenrohr aufgepresst wird.

Wenn jeder Lagerzapfen auf seiner Aussenseite ein Schutzrohr aufweist, das aus gleichem oder ähnlichem Material gefertigt ist wie der Walzenmantel, können gleich mehrere Vorteile erzielt werden. Einerseits braucht so auch der Lagerzapfen nicht aus rostfreiem Material hergestellt zu werden, welches bezüglich der Festigkeitseigenschaften ohnehin ungünstig ist, womit auch die Kosten gesenkt werden können. Der Lagerzapfen, z.B. aus einem üblichen Maschinenbaustahl mit hoher Festigkeit, ist durch das Schutzrohr trotzdem vor aggressiven Medien geschützt. Das Schutzrohr kann aber gleichzeitig einen axialen Anschlag für den Lagerzapfen im Innenrohr bilden, so dass der Lagerzapfen auf Endmass vorgefertigt werden kann und nicht mehr mit dem Innenrohr verschweisst werden muss. Der Lagerzapfen lässt sich vielmehr präzise koaxial und mit der richtigen Distanz in das Innenrohr einsetzen, so dass ein nachträgliches Ueberdrehen des Aussenrohres auf der Drehmaschine nicht erforderlich ist.

Vorzugsweise sind die beiden Walzenenden mit je einer Stirnscheibe abgeschlossen, welche einerseits mit dem Schutzrohr und andererseits mit dem Walzenaussenmantel verbunden ist. Diese Stirnscheibe ist ersichtlicherweise ebenfalls aus einem gleichen oder ähnlichen Material gefertigt wie der Walzenaussenmantel bzw. wie das Schutzrohr. Auf diese Weise ist die Hohlwalze auf ihrer Aussenseite vollständig mit einem korrosionsfesten Mantel versehen. Wenn dabei die beiden Stirnscheiben im axialen Abstand zum Aussenrohr bzw. zu den Stützstegen angeordnet sind, können bei Temperatureinwirkungen die Dehnungsdifferenzen zwischen den unterschiedlichen Materialien keinen schädigenden Einfluss ausüben. Ausserdem können auf diese Weise Fertigungstoleranzen ausgeglichen werden. Die Stirnscheiben bilden somit eine Art Membrane, die das Aussenrohr beidseitig verschliessen. Da die Stirnscheiben nicht direkt an die Lagerzapfen, sondern an die darauf sitzenden Schutzrohre geschweisst werden, unterliegen die Lagerzapfen beim Schweissen praktisch keinen thermischen Beeiflussungen, die zu Materialspannungen, Unwuchten usw. führen können.

Ein Ausführungsbeispiel der Erfindung ist in den Zeichnungen dargestellt und wird nachstehend genauer beschrieben. Es zeigen:

Figur 1 einen Längsschnitt durch die Ebene B-B einer erfindungsgemässen Hohlwalze gemäss Figur 2,

Figur 2 einen Querschnitt durch die Ebene A-A der Hohlwalze gemäss Figur 1, und

Figur 3 eine Detaildarstellung Schweissverbindung des Walzenaussenmantels bei Figur 2.

Das Innenrohr 1, die von diesem sternförmig ausgehenden Stützstege 5 und das Aussenrohr 4 sind beim Ausführungsbeispiel einstückig z.B. aus einer Leichtmetall-Legierung hergestellt. Die Stützstege erstrecken sich über die gesamte Länge des Aussenrohres 4. Selbstverständlich wäre es auch denkbar, die Stützstege einzeln zwischen das Aussenrohr und das Innenrohr einzuschweissen, was auch axiale Distanzen zwischen den einzelnen Stützstegen erlauben würde. Das Innenrohr 1 könnte auch einstückig mit den Stützstegen 5 verbunden sein, während das Aussenrohr 4 als separates Rohr auf diese Anordnung aufgepresst wird. Je nach den gewünschten Rundlaufeigenschaften ist der Aussendurchmesser des Aussenrohres 4 präzise bearbeitet oder nicht.

Auf beiden Seiten des Innenrohres sind die Lagerzapfen 2 bzw. 2' befestigt. Der Innendurchmesser des Innenrohres 1 bzw. der Aussendurchmesser der Lagerzapfen ist derart bearbeitet und toleriert, dass der Lagerzapfen aus einem Material mit hoher Festigkeit bereits vor dem Einfügen fertig bearbeitet und in das Innenrohr eingesetzt werden kann. Dazu dient beispielsweise ein Gewinde 9.

Auf die Lagerzapfen 2 ist ein Schutzrohr 8 aus rostfreiem Material aufgepresst. Dieses Schutzrohr dient zugleich als Anschlag 10 zur Begrenzung der Einsetztiefe des Lagerzapfens im Innenrohr 1. Da die Lagerzapfen nicht in das Innenrohr eingeschweisst sind, erübrigt sich so ein nachträgliches Bearbeiten des Walzenrohkörpers.

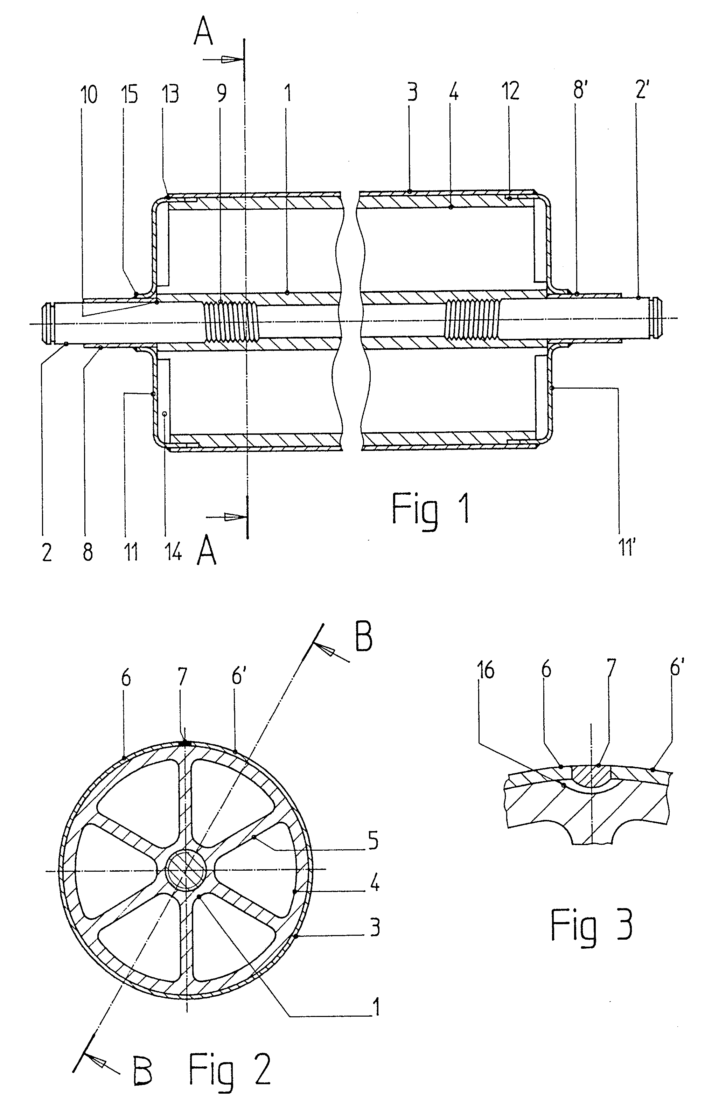

Der Walzenaussenmantel 3 aus einem rostfreien Material wird als flächige Materialbahn auf das Aussenrohr 4 aufgezogen, wobei die beiden Längsseiten 6 und 6' mittels einer Schweissnaht 7 miteinander verbunden sind. Die Materialbahn wird zu diesem Zweck vorgerollt. Wie in Figur 3 dargestellt, ist am Aussenrohr 4 unter der Schweissnaht 7 eine Längsnut 16 vorgesehen, um beim Anbringen der Schweissnaht eine Verschmelzung mit dem Aussenrohr zu verhindern.

Seitlich ist die Hohlwalze mit je einer Stirnscheibe 11 bzw. 11' abgeschlossen. An ihrem Aussenumfang sind diese Stirnscheiben abgewinkelt und untergreifen den Walzenaussenmantel 3. Zu diesem Zweck ist das Aussenrohr 4 auf beiden Seiten mit einem Absatz 12 versehen. Eine Schweissnaht 13 verbindet die beiden Stirnscheiben 11 mit dem Walzenaussenmantel 3. Auf die gleiche Weise ist der radial innere, abgewinkelte Kragen der Stirnscheiben 11 mittels einer Schweissnaht 15 mit den Schutzrohren 8 verbunden. Ersichtlicherweise besteht keine Schweissverbindung zwischen dem korrosionsfesten Aussenmantel, bestehend aus dem Walzenaussenmantel 3, den beiden Schutzrohren 8, 8' und den beiden Stirnscheiben 11, 11', einerseits und dem Aussenrohr 4 bzw. den Lagerzapfen 2 und 2' andererseits. Trotzdem ist der Aussenmantel drehfest auf dem Aussenrohr fixiert, da die beiden Schutzrohre 8, 8' auf die Lagerzapfen 2, 2' aufgepresst sind.

Zwischen dem stirnseitigen Ende des Aussenrohres 4 bzw. der Stützstege 5 und den Stirnscheiben 11, 11' ist ein Zwischenraum 14 vorgesehen, so dass Längenausdehnungen zwischen dem Walzenaussenmantel 3 und dem Aussenrohr 4 aufgenommen werden können.

Eine derart aufgebaute Hohlwalze erfüllt nicht nur die eingangs erwähnten Forderungen, sondern zeichnet sich vor allem auch durch eine rationelle und kostensparende Fertigung aus. Ersichtlicherweise sind konstruktive Modifikationen denkbar, ohne dass dabei der allgemeine Rahmen der Erfindung verlassen wird. So braucht z.B. das Innenrohr 1 nicht unbedingt als durchgehendes Rohr ausgebildet zu sein. Es wäre auch denkbar, dass das Rohr stellenweise massive Abschnitte aufweist. Auch die Stützstege 5 könnten eine andere Konfiguration aufweisen, als im Ausführungsbeispiel dargestellt ist.

**Patentansprüche**

1. Hohlwalze zur Führung von Materialbahnen, insbesondere von Textilbahnen, mit einem axialen Innenrohr (1), das an beiden Enden drehfest mit einem Lagerzapfen (2, 2') verbunden ist, und mit einem das Innenrohr im Abstand umgebenden Walzenaussenmantel (3), dadurch gekennzeichnet, dass der Walzenaussenmantel (3) auf einem Aussenrohr (4) aufliegt, das über Stützstege (5) am Innenrohr (1) abgestützt ist.

2. Hohlwalze nach Anspruch 1, dadurch gekennzeichnet, dass das Aussenrohr (4), die Stützstege (5) und das Innenrohr (1) einstuckig ausgebildet sind.

3. Hohlwalze nach Anspruch 1 oder 2, dadurch gekennzeichnet, dass die Stützstege (5) im Querschnitt etwa sternförmig angeordnet sind und sich über die gesamte axiale Länge des Walzenaussenmantels (3) erstrecken.

4. Hohlwalze nach Anspruch 2 oder 3, dadurch gekennzeichnet, dass das Aussenrohr (4), die Stützstege (5) und das Innenrohr (1) aus Leichtmetall gefertigt sind.

5. Hohlwalze nach Anspruch 4, dadurch gekennzeichnet, dass der Walzenaussenmantel (3) aus einem rostfreien Stahlblech gefertigt ist und um das Aussenrohr (4) gewickelt ist, wobei die beiden aneinander stossenden Längsseiten (6, 6') miteinander verschweisst sind.

6. Hohlwalze nach Anspruch 4, dadurch gekennzeichnet, dass der Walzenaussenmantel (3) ein rostfreies Stahlblech ist, welches auf das Aussenrohr (4) aufgepresst ist.

7. Hohlwalze nach einem der Ansprüche I bis 6, dadurch gekennzeichnet, dass jeder Lagerzapfen (2, 2') auf seiner Aussenseite ein Schutzrohr (8) aufweist, das aus gleichem oder ähnlichem Material gefertigt ist wie der Walzenaussenmantel (3).

8. Hohlwalze nach Anspruch 7, dadurch gekennzeichnet, dass das Schutzrohr (8) einen axialen Anschlag (10) für den Lagerzapfen (2, 2') im Innenrohr (1) bildet.

9. Hohlwalze nach Anspruch 7 oder 8, dadurch gekennzeichnet, dass die beiden Walzenenden mit je einer Stirnscheibe (11) abgeschlossen sind, welche einerseits mit dem Schutzrohr (8) und anderseits mit dem Walzenaussenmantel (3) verbunden ist.

10. Hohlwalze nach Anspruch 9, dadurch gekennzeichnet, dass die beiden Stirnscheiben (11) im axialen Abstand zum Aussenrohr (4) bzw. zu den Stützstegen (5) angeordnet sind.

11. Hohlwalze nach einem der Ansprüche 3 bis 10, dadurch gekennzeichnet, dass sie sechs Stützstege aufweist.

Fig 1

Fig 2

Fig 3